# EUROPEAN PATENT SPECIFICATION

(11) **EP 4 388 721 B1**
(45) Date of publication and mention of the grant of the patent: **04.11.2026**
(21) Application number: 21772798.1
(22) Date of filing: 07.09.2021
(51) Int. Cl.: H04L 45/00, H04L 9/40, H04L 9/00, H04L 9/06, H04L 9/08

(54) **DEVICES AND METHODS FOR PRIVACY-PRESERVING ROUTING IN COMMUNICATION NETWORKS**
VORRICHTUNGEN UND VERFAHREN FÜR DATENSCHUTZBEWAHRENDES ROUTING IN KOMMUNIKATIONSNETZEN
DISPOSITIFS ET PROCÉDÉS DE ROUTAGE PRÉSERVANT LA CONFIDENTIALITÉ DANS DES RÉSEAUX DE COMMUNICATION

(43) Date of publication of application: 26.06.2024
(73) Proprietor: Huawei Technologies Co., Ltd., Shenzhen, Guangdong 518129 (CN)
(72) Inventor: IANNONE, Luigi, 80992 Munich (DE); LOU, Zhe, 80992 Munich (DE); FRESSANCOURT, Antoine, 80992 Munich (DE)
(74) Representative: Gill Jennings & Every LLP
(86) International application number: PCT/EP2021/074533
(87) International publication number: WO 2023/036394

(56) References cited:
- US-A1- 2009 103 734
- US-A1- 2010 250 930
- US-A1- 2020 304 477

## Description

### TECHNICAL FIELD

The present disclosure relates to communication networks in general. More specifically, the present disclosure relates to devices and methods for routing data packets in a communication network from a source network node to a destination network node in a privacy-preserving manner.

### BACKGROUND

Privacy-preserving network protocols for routing in a communication network have been developed using two main approaches, namely a first approach using a trusted third party to break the relationship between the sender and the receiver, or a second approach using a source routing system in which the privacy of the path described by the source node and taken by the packet in the communication network is protected using cryptographic mechanisms.

In the second approach, the source node determines a path to be taken by the packet it sends to the destination node and includes a description of this path in the packets it sends to the destination node. In order to protect the privacy of the source node and the destination node, it should be impossible for an intermediate routing node along the path to determine what the full path taken by the packets in the communication network is. Rather an intermediate routing node along the path should only be able to determine where the packet comes from (i.e. the previous hop along the path), and where it should send the packet to (i.e. the next hop along the path). To allow the communication between the source node and the destination node to be perfectly private, those intermediate routing nodes, moreover, should not be able to determine the path's length, nor to use any information carried by the packet to correlate packets belonging to the same network flow together.

In light of the above, there is a need for improved devices and methods for routing data packets in a communication network from a source node to a destination node via one or more intermediate routing node in a privacy-preserving manner.

US2010250930A1 discloses a method and apparatus for protecting the routing of data packets in a packet data network. When a first end-host sends an address query to a DNS server system regarding a second end-host, the DNS server system responds by providing a destination parameter containing an encrypted destination address associated with the second end-host.

### SUMMARY

It is an objective of the present disclosure to provide improved devices and methods for routing data packets in a communication network from a source node to a destination node via one or more intermediate routing nodes in a privacy-preserving manner.

The foregoing and other objectives are achieved by the subject matter of the independent claims. Further implementation forms are apparent from the dependent claims, the description and the figures.

Generally, embodiments disclosed herein allow a source node to encode a path in such a way as to protect information about the path from a rogue observer, while allowing intermediate nodes along the path to decode and lookup routing information they need in a highly efficient fashion. In embodiments disclosed herein this may be implemented in two main stages. In a first stage, public key cryptography may be used by the source node to exchange key material with the intermediate routing nodes forming the path to the destination node. In a second stage, the source node may use this shared key material to build a privacy-protected source routing vector comprising for each of the intermediate routing nodes and the destination node a routing element. This routing vector may have a fixed length and is designed to prevent a given intermediate routing node to derive its position along the path to prevent attacks based on a knowledge of the network topology. Symmetric key cryptography may be used to sequentially encode and/or decode the information carried by the routing elements contained within the routing vector.

More specifically, according to a first aspect a source node is provided for transmitting a data packet to a destination node via one or more intermediate nodes, including a first intermediate node, of a communication network. The communication network may be an IP-based communication network.

The source node comprises a processing circuitry and a communication interface. The processing circuitry is configured to concatenate a first routing vector element including a first bit pattern agreed between the source node and the destination node with an initial routing vector comprising a bit string, to encrypt the concatenation of the first routing vector element and the initial routing vector using a selected first encryption key of a plurality of first candidate encryption keys agreed between the source node and the destination node based on a key derivation mechanism and to replace a portion of the encrypted initial routing vector at a first position of the encrypted initial routing vector by the encrypted first routing vector element for obtaining an encrypted first modified routing vector having the same length as the bit string.

Moreover, the processing circuitry is configured to concatenate a second routing vector element, including a second bit pattern agreed between the source node and the first intermediate node and routing information, e.g. an address or an identifier of the destination node, with the first modified routing vector, encrypt the concatenation of the second routing vector element and the first modified routing vector using a selected second encryption key of a plurality of second candidate encryption keys agreed between the source node and the first intermediate node, and replace a portion of the encrypted first modified routing vector at a second position of the encrypted first modified routing vector by the encrypted second routing vector element for obtaining an encrypted second modified routing vector having the same length as the bit string.

The communication interface is configured to transmit the data packet including the encrypted second modified routing vector towards the first intermediate node.

In a further possible implementation form, the first position of the encrypted initial routing vector and the second position of the encrypted first modified routing vector are random positions selected by the processing circuitry based on a pseudo-random permutation.

In a further possible implementation form, the bit string of the initial routing vector is a random bit string of fixed length.

In a further possible implementation form, the second routing vector element further includes encrypted information about the first position of the encrypted first routing vector element within the encrypted first modified routing vector.

In a further possible implementation form, the data packet further comprises information about the second position of the encrypted second routing vector element within the encrypted second modified routing vector.

In a further possible implementation form, the processing circuitry is further configured to concatenate a third routing vector element, including a third bit pattern agreed between the source node and a second intermediate node and routing information, e.g. an address or an identifier of the first intermediate node, with the second modified routing vector, encrypt the concatenation of the third routing vector element and the second modified routing vector using a selected third encryption key of a plurality of third candidate encryption keys agreed between the source node and the second intermediate node, and replace a portion of the encrypted second modified routing vector at a third random position of the encrypted second modified routing vector by the encrypted third routing vector element for obtaining an encrypted third modified routing vector having the same length as the bit string. The communication interface is further configured to transmit the data packet including the encrypted third modified routing vector towards the second intermediate node of the one or more intermediate nodes of the communication network.

In a further possible implementation form, the processing circuitry is configured to concatenate the first routing vector element with the initial routing vector by prepending the first routing vector element to the initial routing vector and/or the processing circuitry is configured to concatenate the second routing vector element with the first modified routing vector by prepending the second routing vector element to the first modified routing vector.

In a further possible implementation form, the processing circuitry is further configured to encrypt a data packet payload using the selected first encryption key and to further encrypt the encrypted data packet payload using the selected second encryption key.

In a further possible implementation form, for encrypting and decrypting the processing circuitry is configured to use a symmetric key encryption scheme.

In a further possible implementation form, the symmetric key encryption scheme comprises a block cipher, in particular a large block cipher.

In a further possible implementation form, the symmetric key encryption scheme is based on an XOR operation.

In a further possible implementation form, the processing circuitry is configured to generate the first candidate encryption keys using a first key derivation scheme and the second candidate encryption keys using a second key derivation scheme.

In a further possible implementation form, the processing circuitry is further configured to determine the first intermediate node in the communication network using a source routing scheme.

In a further possible implementation form, the first routing vector element further comprises routing information of the destination node.

According to a second aspect a method is provided for transmitting a data packet from a source node to a destination node via one or more intermediate nodes, including a first intermediate node, of a communication network, wherein the method comprises the steps of:
concatenating a first routing vector element including a first bit pattern agreed between the source node and the destination node with an initial routing vector comprising a bit string,
encrypting the concatenation of the first routing vector element and the initial routing vector using a selected first encryption key of a plurality of first candidate encryption keys agreed between the source node and the destination node based on a key derivation mechanism,
replacing a portion of the encrypted initial routing vector at a first position of the encrypted initial routing vector by the encrypted first routing vector element for obtaining an encrypted first modified routing vector having the same length as the bit string;
concatenating a second routing vector element, including a second bit pattern agreed between the source node and the first intermediate node and routing information, e.g. an address or an identifier of the destination node, with the first modified routing vector;
encrypting the concatenation of the second routing vector element and the first modified routing vector using a selected second encryption key of a plurality of second candidate encryption keys agreed between the source node and the first intermediate node;
replacing a portion of the encrypted first modified routing vector at a second position of the encrypted first modified routing vector by the encrypted second routing vector element for obtaining an encrypted second modified routing vector having the same length as the bit string; and
transmitting the data packet including the encrypted second modified routing vector towards the first intermediate node.

The method according to the second aspect can be performed by the source node according to the first aspect. Thus, further features of the method according to the second aspect result directly from the functionality of the source node according to the first aspect as well as its different implementation forms and embodiments described above and below.

According to a third aspect an intermediate node is provided for routing a data packet from a source node to a destination node of a communication network. The intermediate routing node comprises a communication interface configured to receive the data packet from an upstream node of the communication network. Furthermore, the intermediate node comprises a processing circuitry configured to: extract from an encrypted routing vector an encrypted routing vector element, including an encrypted bit pattern and encrypted routing information, e.g. an address or an identifier, of a downstream node; select based on the encrypted bit pattern an encryption key of a plurality of candidate encryption keys; and decrypt the encrypted routing information using the selected key for obtaining the routing information of the downstream node. The communication interface is further configured to send the data packet to the downstream node based on the routing information of the downstream node.

In a further possible implementation form of the third aspect, for encrypting and decrypting the processing circuitry is configured to use a symmetric key encryption scheme.

In a further possible implementation form of the third aspect, the symmetric key encryption scheme comprises a block cipher.

In a further possible implementation form of the third aspect, the symmetric key encryption scheme is based on an XOR operation.

In a further possible implementation form of the third aspect, the upstream node is the source node or a further intermediate node.

In a further possible implementation form of the third aspect, the downstream node is the destination node or a further intermediate node.

In a further possible implementation form of the third aspect, the processing circuitry is further configured to re-encrypt the routing vector element using the selected key.

According to a fourth aspect a method for routing a data packet from a source node via an intermediate node to a destination node of a communication network is provided. The method according to the fourth aspect comprises the steps of:
receiving the data packet from an upstream node of the communication network;
extracting from an encrypted routing vector an encrypted routing vector element, including an encrypted bit pattern and encrypted routing information, e.g. an address or an identifier of a downstream node;
selecting based on the encrypted bit pattern an encryption key of a plurality of candidate encryption keys;
decrypting the encrypted routing information using the selected key for obtaining the routing information of the downstream node; and
sending the data packet to the downstream node based on the routing information of the downstream node.

The method according to the fourth aspect can be performed by the intermediate node according to the third aspect. Thus, further features of the method according to the fourth aspect result directly from the functionality of the intermediate node according to the third aspect as well as its different implementation forms and embodiments described above and below.

According to a fifth aspect a computer program product is provided, comprising a computer-readable storage medium for storing program code which causes a computer or a processor to perform the method according to the second aspect or the method according to the fourth aspect, when the program code is executed by the computer or the processor.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 is a schematic diagram illustrating a communication network with a source node according to an embodiment for transmitting data packets along a path via a plurality of intermediate routing nodes according to an embodiment to a destination node;
Figs. 2a-d show schematic diagrams illustrating steps of generating a routing vector comprising a plurality of routing elements by a source node according to an embodiment;
Figs. 3a-d show schematic diagrams illustrating further steps of generating a routing vector comprising a plurality of routing elements by a source node according to an embodiment;
Fig. 4 is a schematic diagram illustrating the routing vector comprising a plurality of routing elements as received by an intermediate routing node;
Figs. 5a-d show schematic diagrams illustrating steps of processing the routing vector of figure 4 by an intermediate routing node according to an embodiment;
Fig. 6 is a flow diagram illustrating a method for transmitting a data packet according to an embodiment; and
Fig. 7 is a flow diagram illustrating a method for routing a data packet according to an embodiment.

In the following, identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

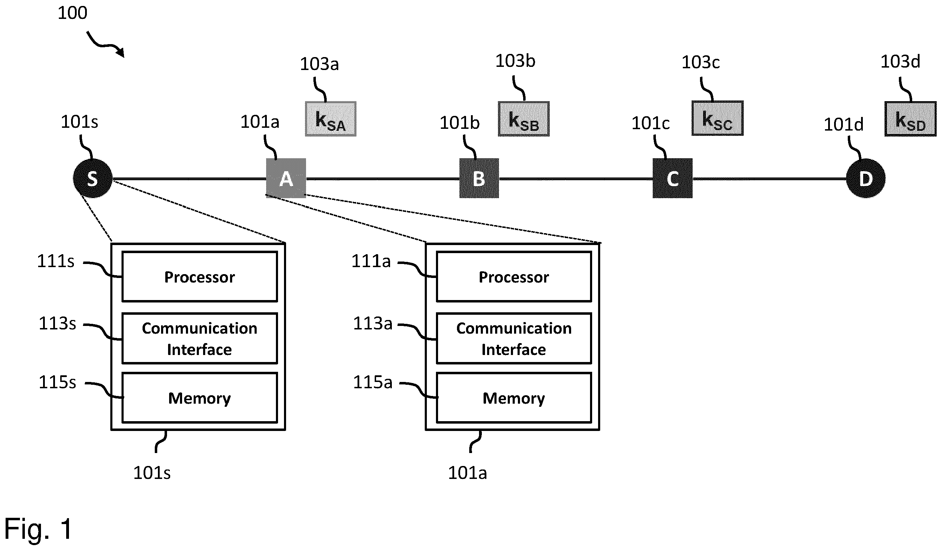

Figure 1 is a schematic diagram of a communication network 100 with a plurality of intermediate nodes 101a-c for routing data packets along a communication path from a source node 101s to a destination node 101d of the communication network 100. In an embodiment, the communication network 100 may be an IP-based communication network 100 and the plurality of intermediate nodes 101a-c may comprise one or more routers 101a-c.

As illustrated in figure 1, the source node 101s comprises a processing circuitry 111s and a communication interface 113s. The processing circuitry 111s of the source node 101s may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The communication interface 113s may be a wired and/or wireless communication interface configured to exchange data packets, e.g. IP data packets with the other nodes of the communication network 100. As illustrated in figure 1, the source node 101s may further comprise a non-transitory memory 115s configured to store data and executable program code which, when executed by the processing circuitry 111s causes the source node 101s to perform the functions, operations and methods described herein.

Likewise, the exemplary intermediate routing node 101a comprises a processing circuitry 111a and a communication interface 113a. The processing circuitry 111a of the exemplary intermediate routing node 101a may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The communication interface 113a may be a wired and/or wireless communication interface configured to exchange data packets, e.g. IP data packets with the other nodes of the communication network 100. As illustrated in figure 1, the exemplary intermediate routing node 101a may further comprise a non-transitory memory 115a configured to store data and executable program code which, when executed by the processing circuitry 111a causes the exemplary intermediate routing node 101a to perform the functions, operations and methods described herein. The other intermediate routing nodes 101b and 101c may have the same or a similar setup and/or configuration as the intermediate routing node 101a.

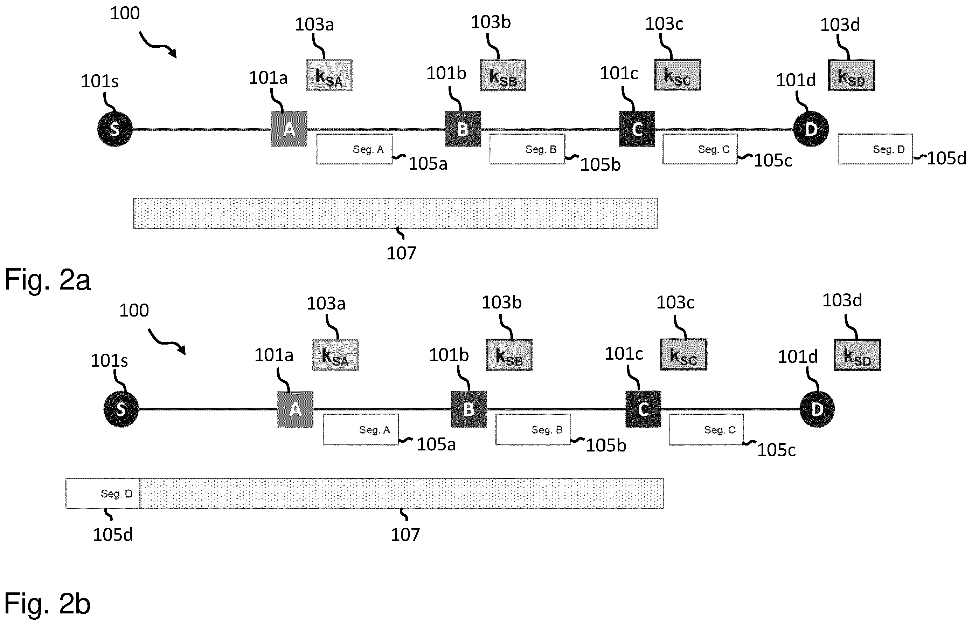

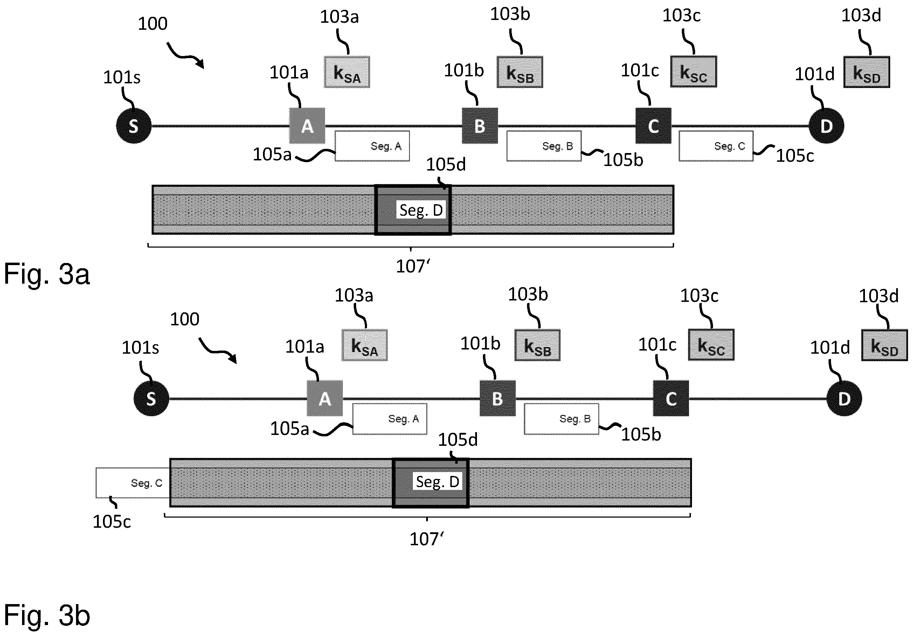

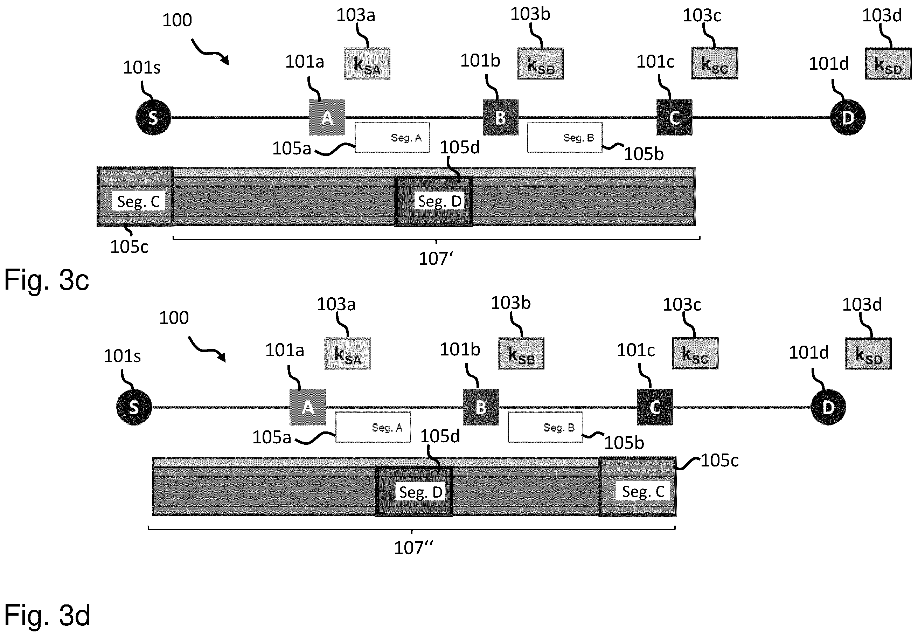

As will be described in more detail below under further reference to figures 2a-d and 3a-d, the processing circuitry 111s of the source node 101s is configured to concatenate a first routing vector element 105d including a first bit pattern agreed between the source node 101s and the destination node 101d with an initial routing vector 107 comprising a bit string, encrypt the concatenation of the first routing vector element 105d and the initial routing vector 107 using a selected first encryption key 103d of a plurality of first candidate encryption keys, and replace a portion of the encrypted initial routing vector 107 at a first position of the encrypted initial routing vector 107 by the encrypted first routing vector element 105d for obtaining a first modified routing vector 107'.

Moreover, the processing circuitry 111s of the source node 101s is configured to concatenate a second routing vector element 105c, including a second bit pattern agreed between the source node 101a and the first intermediate node 101c upstream of the destination node 101d as well as routing information of the destination node 101d, with the first modified routing vector 107', encrypt the concatenation of the second routing vector element 105c and the first modified routing vector 107' using a selected second encryption key 103c of a plurality of second candidate encryption keys, and replace a portion of the encrypted first modified routing vector 107' at a second position of the encrypted first modified routing vector 107' by the encrypted second routing vector element 105c for obtaining a second modified routing vector 107". The same or similar processing steps may be performed for the other intermediate routing nodes 101b and 101a. The communication interface 113s of the source node 101s is configured to transmit the data packet to the first intermediate routing node 101a downstream of the source node 101s.

The communication interface 113a of the exemplary intermediate routing node 101a is configured to receive the data packet from the source node 101s. The processing circuitry 111a of the exemplary intermediate routing node 101a is configured to extract from the encrypted routing vector 107" the encrypted routing vector element 105a, including an encrypted bit pattern and encrypted routing information of the next downstream node, i.e. the intermediate routing node 101b, select based on the encrypted bit pattern an encryption key 103a of a plurality of candidate encryption keys, and decrypt the encrypted routing information using the selected key 103a for obtaining the routing information of the next downstream node, i.e. the intermediate routing node 101b. The communication interface 113a of the exemplary intermediate routing node 101a is further configured to send the data packet to the next downstream node, i.e. the intermediate routing node 101b based on the extracted routing information of the intermediate routing node 101b.

As will be described in more detail below, embodiments disclosed herein may make use of one or more of four major elements that ensure the fulfillment of advantageous privacy protection properties.

A first mayor element of one or more embodiments disclosed herein is that the information carried by a routing vector 107 containing a plurality of routing vector elements (or short routing elements) 105a-d is protected using a respective shared symmetric key. Advantageously, the use of symmetric key cryptography allows the intermediate routing nodes 101a-c to operate at line rate. A respective set of shared candidate keys is negotiated between the source node 101a and each intermediate node 101a-c along the path. This negotiation of the candidate keys may be based on public key cryptography. Once this shared key is agreed upon, a set of temporary keys can be derived from this master key to avoid the use of public key cryptography while ensuring a key rotation that prevents packets to be associated in a same data flow.

A second mayor element of one or more embodiments disclosed herein is that the routing vector 107 containing the routing elements may have a fixed size as the corresponding data packet travels along the path from the source node 101s to the destination node 101d. This allows preventing an external observer intercepting a data packet to derive any hints about the source node 101s and the destination node 101d based on the length of the routing vector 107.

A third mayor element of one or more embodiments disclosed herein is that the position of the routing element for a given intermediate node 101a-c may be randomly permuted within the routing vector 107 so that the respective intermediate node 101a-c cannot infer based on the position of its routing element within the routing vector 107 any information about how many hops it is away from the source node 101s or the destination node 101d. This may prevent deanonymization attacks using topological information to diminish the anonymity set's size for either the source node 101s or the destination node 101d.

A fourth mayor element of one or more embodiments disclosed herein is that the routing vector 107 is generated and processed in such a way that it can be processed at each intermediate node 101a-c without having to perform a lot of rewrite operations.

As will be appreciated, in an embodiment, the relevant part of the routing vector may not be the first bytes dedicated to carrying a first routing element, but due to the random permutation a different set of bytes, whose position is defined a header element of the data packet. In an embodiment, the symmetric encryption operation for encrypting/decrypting the respective routing element of the routing vector at an intermediate node 101a-c may be an XOR operation with the respective selected candidate key 103a-d. This processing is very quick and may ensure that the data packet can be processed at line rate. In an embodiment, the encryption operation may be performed after prepending the routing vector 107 with the routing element 150a-c of an intermediate routing node 101a-d and then using the selected symmetric key established with that node to encrypt the concatenation. During a further step, the prepended routing element is cut and put in the randomly selected position within the routing vector 107. As will be appreciated, this "encrypt, then cut and paste"-approach for generating the routing vector 107 avoids having information in the clear during the packet relaying phase, while avoiding the need to rewrite the whole routing vector 107. This allows preventing packet correlation attacks allowing an attacker to associate packets to a specific flow of data packets.

By combing one or more of the four mayor elements described above, embodiments disclosed herein may protect the privacy of a path through the communication network 100 at the network layer without having to involve a trusted third party. Source routing and recursive routing vector encryption may be used so that a given intermediate node 101a-c can only access routing information that is relevant to the respective node, and an external observer is unable to correlate packets belonging to the same flow together.

In the following, the generation of the routing vector 107 by the source node 101s and the relaying of the routing vector 107 by the intermediate routing nodes 101a-c to the destination node 101d for the exemplary path shown in figure 1 is described in more detail.

In an embodiment, the routing vector 107 may have a fixed size in that the length, i.e. the number of bits/bytes of the routing vector 107 stays constant as the data packet containing the routing vector 107 travels from the source node 101a via the intermediate routing nodes 101a-c to the destination node 101d. In an embodiment, the routing vector 107 may contain *MAX*_*PATH*_*LENGTH* elements of size *SEGMENT*_*LENGTH* bytes containing in particular the routing information that will be used by a given intermediate node 101a-c for routing the data packet to the destination node 101d.

The source node 101s has exchanged shared key material with the intermediate nodes 101a-c and the destination node 101d. In an embodiment, this shared key material may comprise a respective shared master key as well as a respective synchronized key derivation scheme and its associated parameters. In an embodiment, for encrypting/decrypting the source node 101s, the intermediate routing nodes 101a-c and the destination node 101d may use a large block symmetric key encryption scheme *Enc*(...) such that *Enc*(*Enc*(*p*, *k_{SX}*), *k_{SX}*) *= p*.

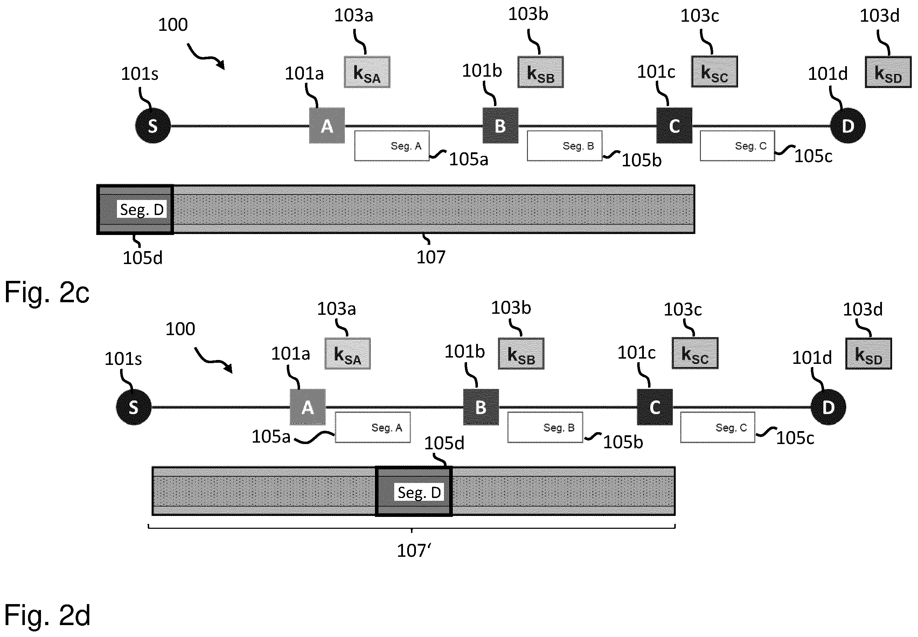

Figures 2a-d and 3a-d illustrate different stages of the generation of the data packet including the routing vector 107 by the source node 101s according to an embodiment. In a preliminary stage, the source node 101s may determine based on a source routing scheme a path to the destination node 101d through the communication network 100, which in the exemplary embodiment shown in figures 1, 2a-d and 3a-d includes the intermediary routing nodes 101a-c. For encoding information about this path in the data packet the processing circuitry 111s of the source node 101s obtains the addresses for the intermediate routing nodes 101a-c and the destination node 101d along this path, i.e. A_addr, B_addr, C_addr and D_addr. Thereafter, the processing circuitry 111s of the source node 101s may initialize the routing vector 107 by generating a random byte string of length *MAX*_*PATH*_*LENGTH* x *SEGMENT*_*LENGTH*. As will be appreciated, for this embodiment the initialized routing vector 107 defines *MAX*_*PATH*_*LENGTH* slots for the routing elements 105a-d, wherein each slot, i.e. routing element 105a-d comprises *SEGMENT*_*LENGTH* bits. In an embodiment, the processing circuitry 111s of the source node 101s is configured to randomize the location of the plurality of routing elements 105a-d within the routing vector 107 based on a pseudo-random permutation over the *MAX*_*PATH*_*LENGTH* slots available of the routing vector 107. As will be described in more detail below, in case the next downstream node is another intermediate routing node each routing element 105a-d (referred to as "Seg. A", "Seg. B", "Seg. C" and "Seg. D" in figure 2) may comprise in addition to the respective encrypted bit pattern information, e.g. an address of the next downstream intermediate node 101a-c as well as a pointer to the location of the routing element 105a-d of the next downstream intermediate node 101a-c within the routing vector 107. In an embodiment, because the destination node 101s is the last node along the path the routing element 105d for the destination node 101d ("Seg. D" in figure 2) may only comprise the encrypted bit pattern for identifying the encryption key. In a further embodiment, the routing element 105d for the destination node 101d may further comprise an address of the destination node 101d or a default address indicative of the destination node 101d being the destination of the data packet.

Having performed the operations described above the following elements are available to source node 101s: a list of the intermediate routing nodes 101a-c defining the path to the destination node 101d, the routing elements 105a-d for the intermediate routing nodes 101a-c and the destination node 101d as well as the information about the random locations of the respective routing elements 105a-d within the routing vector 107. Based on this information the processing circuitry 111s of the source node 101s may generate the complete routing vector 107 starting with the routing element 105d for the destination node 101d, as illustrated in figures 2a.

As illustrated in figure 2b, the processing circuitry 111s of the source node 101s prepends the routing element 105d (i.e. "Seg. D") to the initial routing vector 107, e.g. the randomized bit string 107. In a next stage, the processing circuitry 111s of the source node 101s obtains an encryption key based directly or indirectly on the shared key *k_{SD}* between the source node 101s and the destination node 101d. In an embodiment, the processing circuitry 111s of the source node 101s may select the encryption key from a plurality of encryption key candidates that are based on the shared key *k_{SD}.* In an embodiment, the source node 101s and the destination node 101d may use the same key derivation scheme for generating the plurality of encryption key candidates based on the shared key *k_{SD}.* In an embodiment, the encryption key may have the length (*MAX*_*PATH*_*LENGTH + 1*) x *SEGMENT*_*LENGTH*, i.e. the same length (number of bits) as the concatenation of the routing element 105d (i.e. "Seg. D") with the initial routing vector 107, e.g. the randomized bit string 107. In such an embodiment, the processing circuitry 111s of the source node 101s may encrypt the concatenation of the routing element 105d (i.e. "Seg. D") with the initial routing vector 107 by performing an XOR operation of the selected encryption key with the concatenation of the routing element 105d (i.e. "Seg. D") with the initial routing vector 107. In an embodiment, the processing circuitry 111s of the source node 101s may use for the encryption a block cipher witch a large block size, such as Lioness which builds on top of AES-128. In this block cipher, the encryption is a XOR operation with a large vector built using the selected key. As will be appreciated, for such a cipher based on an XOR operation, encryption and decryption are symmetric, and the position of the encrypted elements plays a role in the encryption's correctness.

After the concatenation of the routing element 105d (i.e. "Seg. D") with the initial routing vector 107 of length (*MAX*_*PATH*_*LENGTH + 1*) x *SEGMENT*_*LENGTH* has been encrypted, the processing circuitry 111s of the source node 101s is configured to cut the encrypted routing element 105d (i.e. "Seg. D"), i.e. the first *SEGMENT*_*LENGTH* bits of the encrypted string and paste this byte string at the location within the routing vector 107 predetermined by the random permutation, as illustrated in figures 2c and 2d.

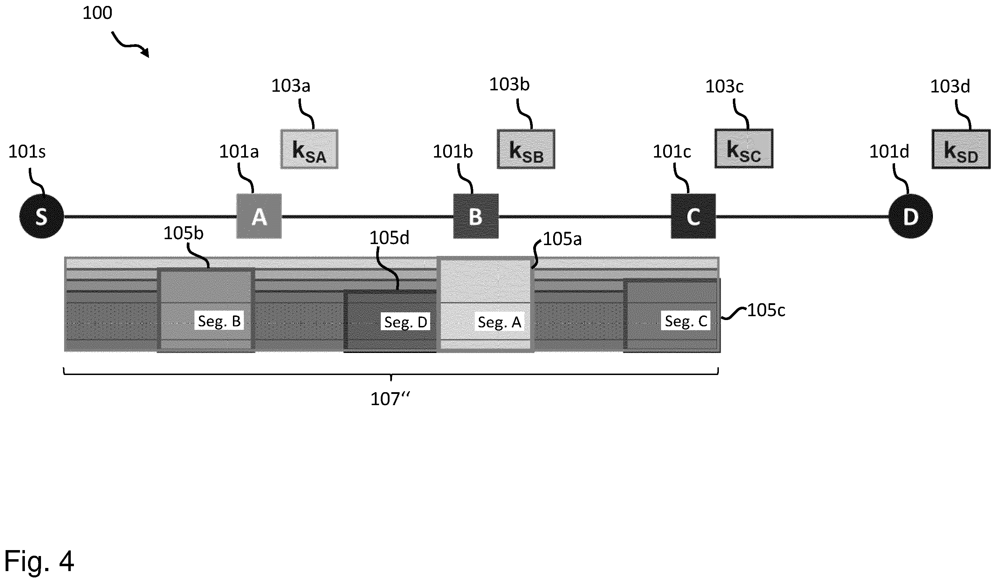

As will be appreciated from figures 3a-d, the same processing steps are performed by the processing circuitry 111s of the source node 101s for including the routing elements of the intermediate routing nodes 101a-c. Thus, the source node 101s continues the process described above with respect to the destination node 101d first for the first intermediate node upstream of the destination node 101d, namely intermediate node 101c, then for intermediate node 101b and finally for intermediate node 101a. As a result of this sequential generation process implemented by the processing circuitry 111s of the source node 101s the sequentially-encrypted routing elements vector 107" illustrated in figure 4 is obtained, which is send via the communication interface 113s of the source node 101s to the first downstream intermediate routing node 101a.

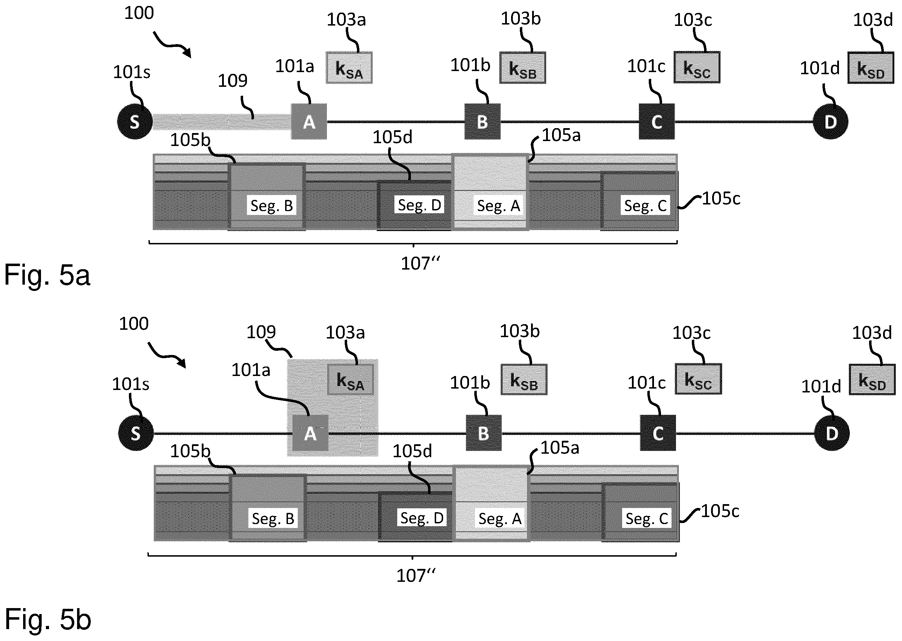

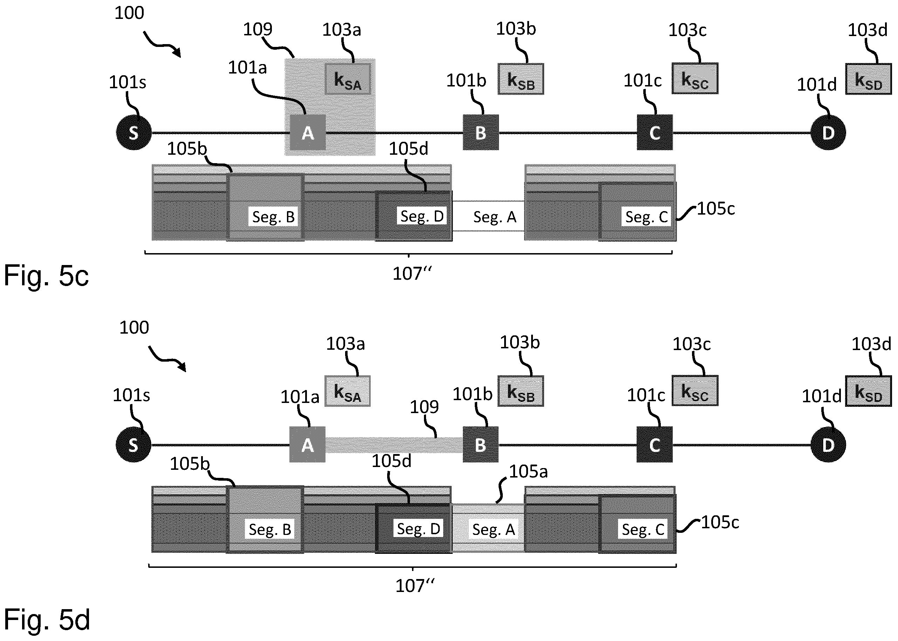

Figures 5a-d illustrate in more detail how the data packet shown in figure 4 is processed and relayed by the exemplary intermediate routing node 101a. In an embodiment, the header of the data packet carrying the routing elements vector 107" further contains a pointer to the encrypted routing element 105a of the intermediate routing node 101a, i.e. *Enc(Seg. A, k_{SA}).* Based on the encrypted bit pattern included in the encrypted routing element 105a the processing circuitry 111a of the intermediate routing node 101a is configured to determine the key k_{SA} for decrypting the encrypted routing element 105a of the intermediate routing node 101a, i.e. *Enc(Seg. A, k_{SA})*. Once decrypted, the processing circuitry is configured to extract the routing information of the next downstream node from the routing element 105a, e.g. an address of the routing node 101b as well as information about the random location of the routing element 105b of the intermediate routing node 101b within the routing vector 107". In an embodiment, the processing circuitry may be configured to re-encrypt its routing element 105a within the routing vector 107".

In an embodiment, the processing circuitry 111a of the intermediate routing node 101a is configured to generate a key stream of length (*MAX*_*PATH*_*LENGTH + 1*) x *SEGMENT*_*LENGTH* based on the key k_{SA} and to use the first *SEGMENT*_*LENGTH* bits of the key stream to decrypt (for instance by an XOR operation with the key stream) the encrypted routing element 105a, i.e. *Enc(Seg. A, k_{SA})* and to retrieve the routing information it needs for routing the data packet, namely the address of the next intermediate routing node 101b as well as the pointer to the slot in the routing vector 107" associated with this next node. In an embodiment, the processing circuitry 111a of the intermediate routing node 101a may insert the pointer to the slot in the routing vector 107" associated with the next downstream node, i.e. the intermediate routing node 101b as unencrypted metadata in the header of the data packet. Then the processing circuitry 111a of the intermediate routing node 101a is configured to re-encrypt the whole routing vector 107", for instance, by using the trailing *MAX*_*PATH*_*LENGTH* x *SEGMENT*_*LENGTH* bits of the key stream generated on the basis of the key *k_{SA}*. This hides the information contained in the routing element 105a (i.e. *Seg. A)* and removes the *k_{SA}* encryption layer from the remaining of the routing vector 107". The such processed data packet is forward to the next downstream intermediate routing node 101b. The key *k_{SA}* or its derivative can then be deleted in order to prevent it from being retrieved or reused. In a further embodiment, the key *k_{SA}* may be kept, if forward secrecy is not a threat that is considered serious.

As will be appreciated, at the intermediate routing nodes 101b and 101c the same steps may be performed as described above in the context of the intermediate routing node 101a. In this way the data packet and the routing vector 107" contained therein is further processed and relayed to the destination node 101d. Like the intermediate routing nodes 101a-c the destination node 101d may be configured to retrieve the routing element 105d from the routing vector 107". In an embodiment, the routing element 105d of the destination node 101d may only comprise the encrypted bit pattern for identifying the encryption key used by the source node 101s for encrypting the packet payload. In a further embodiment, the routing element 105d for the destination node 101d may further comprise its own address (or a default address) indicating to the destination node 101d that it is the intended destination of the data packet.

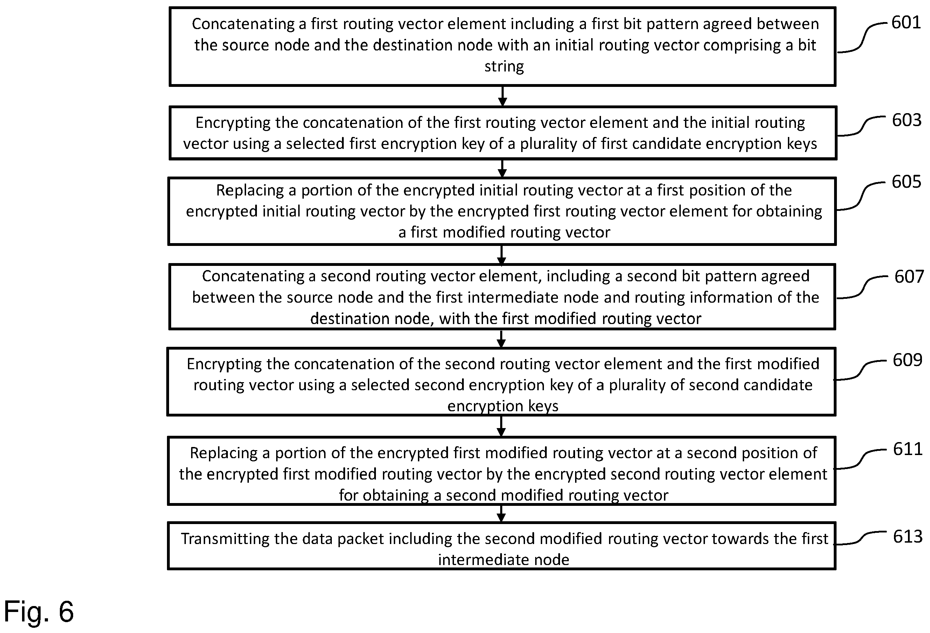

Figure 6 is a flow diagram illustrating a method 600 for transmitting a data packet from a source node to a destination node via one or more intermediate nodes, including a first intermediate node, in a communication network according to an embodiment.

The method 600 comprises a step of concatenating 601 a first routing vector element including a first bit pattern agreed between the source node and the destination node with an initial routing vector comprising a bit string.

The method 600 further comprises a step of encrypting 603 the concatenation of the first routing vector element and the initial routing vector using a selected first encryption key of a plurality of first candidate encryption keys.

The method 600 further comprises a step of replacing 605 a portion of the encrypted initial routing vector at a first position of the encrypted initial routing vector by the encrypted first routing vector element for obtaining a first modified routing vector.

The method 600 further comprises a step of concatenating 607 a second routing vector element, including a second bit pattern agreed between the source node and the first intermediate node and routing information of the destination node, with the first modified routing vector.

The method 600 further comprises a step of encrypting 609 the concatenation of the second routing vector element and the first modified routing vector using a selected second encryption key of a plurality of second candidate encryption keys.

The method 600 further comprises a step of replacing 611 a portion of the encrypted first modified routing vector at a second position of the encrypted first modified routing vector by the encrypted second routing vector element for obtaining a second modified routing vector.

The method 600 further comprises a step of transmitting 613 the data packet including the second modified routing vector towards the first intermediate node.

The method 600 can be performed by the source node 101s according to an embodiment. Thus, further features of the method 600 result directly from the functionality of the source node 101a as well as its different embodiments described above and below.

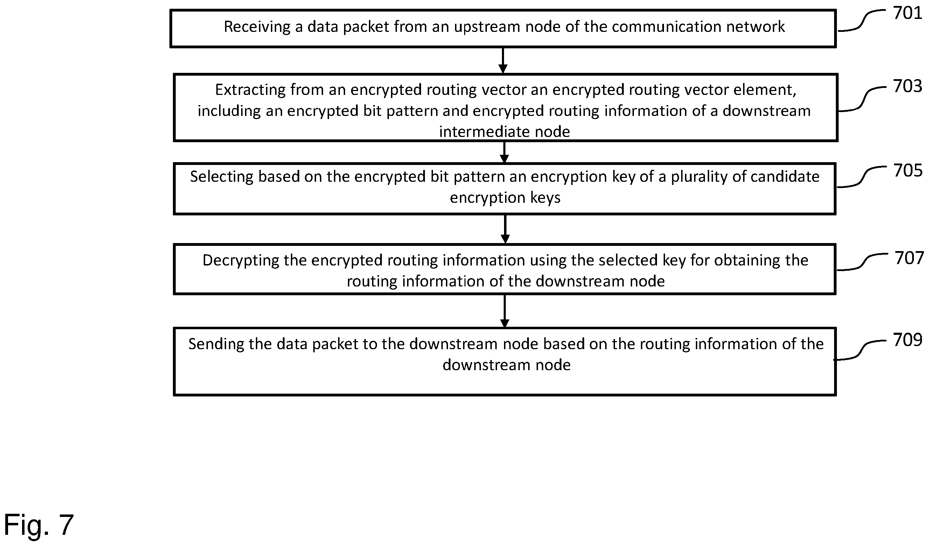

Figure 7 is a flow diagram illustrating a method 700 for routing a data packet from a source node via an intermediate node to a destination node of a communication network according to an embodiment.

The method 700 comprises a step of receiving 701 the data packet from an upstream node of the communication network.

The method 700 further comprises a step of extracting 703 from an encrypted routing vector an encrypted routing vector element, including an encrypted bit pattern and encrypted routing information of a downstream node.

The method 700 further comprises a step of selecting 705 based on the encrypted bit pattern an encryption key of a plurality of candidate encryption keys.

The method 700 further comprises a step of decrypting 707 the encrypted routing information using the selected key for obtaining the routing information of the downstream node.

The method 700 further comprises a step of sending 709 the data packet to the downstream node based on the routing information of the downstream node.

The method 700 can be performed by one of the intermediate routing nodes 101a-c according to an embodiment. Thus, further features of the method 700 result directly from the functionality of the intermediate routing nodes 101a-c as well as their different embodiments described above and below.

Embodiments disclosed herein make use of a privacy-preserving routing element vector 107 to be used in the anonymous source routing communication network 100. The privacy of the information stored in the routing element vector 107 may be ensured by the fixed size of the vector 107 to prevent an external observer to determine the path's length. The in-vector location of each routing element 105a-c may be given by a pseudo-random permutation to prevent an observer from determining the position of a node on the path. A shared symmetric key may be used to encode the routing information elements. The shared symmetric key may be a one-time key derived from a master key to ensure packet flow unlinkability. The above described prepend, encrypt then cut and paste approach allows an intermediate node 101a-c processing the routing element vector 107 to have to rewrite the whole structure, thus making packet processing faster.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments disclosed herein may be integrated into one processing unit, or each of the units may exist alone physically, or two or more units are integrated into one unit.

## Claims

1. A source node (101s) for transmitting a data packet to a destination node (101d) via one or more intermediate nodes (101a-c), including a first intermediate node (101c), in a communication network (100), wherein the source node (101s) comprises:
a processing circuitry (111s) configured to:
concatenate a first routing vector element (105d) including a first bit pattern agreed between the source node (101s) and the destination node (101d) with an initial routing vector (107) comprising a bit string,
encrypt the concatenation of the first routing vector element (105d) and the initial routing vector (107) using a selected first encryption key (103d) of a plurality of first candidate encryption keys agreed between the source node and the destination node based on a key derivation mechanism,
replace a portion of the encrypted initial routing vector (107) at a first position of the encrypted initial routing vector (107) by the encrypted first routing vector element (105d) for obtaining a first modified routing vector (107'),
concatenate a second routing vector element (105c), including a second bit pattern agreed between the source node (101a) and the first intermediate node (101c) and routing information of the destination node (101d), with the first modified routing vector (107'),
encrypt the concatenation of the second routing vector element (105c) and the first modified routing vector (107') using a selected second encryption key (103c) of a plurality of second candidate encryption keys agreed between the source node and the first intermediate node, and
replace a portion of the encrypted first modified routing vector (107') at a second position of the encrypted first modified routing vector (107') by the encrypted second routing vector element (105c) for obtaining a second modified routing vector (107"); and
a communication interface (113s) configured to transmit the data packet including the second modified routing vector (107") towards the first intermediate node (101c).

2. The source node (101s) of claim 1, wherein the first position of the encrypted initial routing vector (107) and the second position of the encrypted first modified routing vector (107') are random positions selected by the processing circuitry (111s) based on a pseudo-random permutation.

3. The source node (101s) of claim 1 or 2, wherein the initial routing vector (107) is a random bit string of fixed length.

4. The source node (101s) of any one of the preceding claims, wherein the second routing vector element (105c) further includes information about the first position of the encrypted first routing vector element (105d) within the first modified routing vector (107').

5. The source node (101s) of any one of the preceding claims, wherein the data packet further comprises information about the second position of the encrypted second routing vector element (105c) within the second modified routing vector (107").

6. The source node (101s) of any one of the preceding claims, wherein the processing circuitry (111s) is further configured to:
concatenate a third routing vector element (105b), including a third bit pattern agreed between the source node (101s) and a second intermediate node (101b) and routing information of the first intermediate node (101c), with the second modified routing vector (107");
encrypt the concatenation of the third routing vector element (105b) and the second modified routing vector (107") using a selected third encryption key (103b) of a plurality of third candidate encryption keys; and
replace a portion of the encrypted second modified routing vector (107") at a third random position of the encrypted second modified routing vector (107") by the encrypted third routing vector element (105b) for obtaining a third modified routing vector; and
wherein the communication interface (113s) is configured to transmit the data packet including the third modified routing vector towards the second intermediate node (101b) of the one or more intermediate nodes (101a-c).

7. The source node (101s) of any one of the preceding claims, wherein the processing circuitry (111s) is configured to concatenate the first routing vector element (105d) with the initial routing vector (107) by prepending the first routing vector element (105d) to the initial routing vector (107) and/or wherein the processing circuitry (111s) is configured to concatenate the second routing vector element (105c) with the first modified routing vector (107') by prepending the second routing vector element (105c) to the first modified routing vector (107').

8. The source node (101s) of any one of the preceding claims, wherein the processing circuitry (111s) is further configured to encrypt a data packet payload using the selected first encryption key (103d) and to further encrypt the data packet payload using the selected second encryption key (103c).

9. The source node (101s) of any one of the preceding claims, wherein for encrypting and decrypting the processing circuitry (111s) is configured to use a symmetric key encryption scheme.

10. The source node (101s) of claim 9, wherein the symmetric key encryption scheme comprises a block cipher.

11. A method (600) for transmitting a data packet from a source node (101s) to a destination node (101d) via one or more intermediate nodes (101a-c), including a first intermediate node (101c), in a communication network (100), wherein the method (600) comprises:
concatenating (601), by the source node (101s), a first routing vector element (105d) including a first bit pattern agreed between the source node (101s) and the destination node (101d) with an initial routing vector (107) comprising a bit string,
encrypting (603), by the source node (101s), the concatenation of the first routing vector element (105d) and the initial routing vector (107) using a selected first encryption key (103d) of a plurality of first candidate encryption keys agreed between the source node and the destination node based on a key derivation mechanism,
replacing (605), by the source node (101s), a portion of the encrypted initial routing vector (107) at a first position of the encrypted initial routing vector (107) by the encrypted first routing vector element (105d) for obtaining a first modified routing vector (107');
concatenating (607), by the source node (101s), a second routing vector element (105c), including a second bit pattern agreed between the source node (101s) and the first intermediate node (101c) and routing information of the destination node (101d), with the first modified routing vector (107');
encrypting (609), by the source node (101s), the concatenation of the second routing vector element (105c) and the first modified routing vector (107') using a selected second encryption key (103c) of a plurality of second candidate encryption keys agreed between the source node and the first intermediate node;
replacing (611), by the source node (101s), a portion of the encrypted first modified routing vector (107') at a second position of the encrypted first modified routing vector (107') by the encrypted second routing vector element (105c) for obtaining a second modified routing vector (107"); and
transmitting (613), by the source node (101s), the data packet including the second modified routing vector (107") towards the first intermediate node (101c).

12. A communication network (100) for routing a data packet from a source node (101s) to a destination node (101d), the communication network comprising a source node according to any of claims 1-10 and an intermediate node (101a-c), wherein the intermediate node (101a-c) comprises:
a communication interface (113a) configured to receive the data packet, transmitted by the source node, from an upstream node of the communication network (100); and
a processing circuitry (111a) configured to:
extract from an encrypted routing vector (107"), in said received data packet, an encrypted routing vector element (105b), including an encrypted bit pattern and encrypted routing information of a downstream node;
select based on the encrypted bit pattern an encryption key (103a) of a plurality of candidate encryption keys; and
decrypt the encrypted routing information using the selected encryption key (103a) for obtaining routing information of the downstream node;
wherein the communication interface (113a) is further configured to send the data packet to the downstream node, on the path towards the destination node, based on the obtained routing information of the downstream node.

13. The communication network of claim 12, wherein for encrypting and decrypting the processing circuitry (111a) of the intermediate node (101a-c) is configured to use a symmetric key encryption scheme.

14. The communication network of claim 13, wherein the symmetric key encryption scheme comprises a block cipher.

15. A computer program product comprising a computer-readable storage medium for storing program code which causes a computer or a processor to perform the method (600) of claim 11 when the program code is executed by the computer or the processor.

## Patentansprüche

1. Quellknoten (101s) zum Übertragen eines Datenpakets über einen oder mehrere Zwischenknoten (101a-c), die einen ersten Zwischenknoten (101c) einschließen, an einen Zielknoten (101d) in einem Kommunikationsnetzwerk (100), wobei der Quellknoten (101s) umfasst:
eine Verarbeitungsschaltung (111s), die konfiguriert zum:
Verketten eines ersten Routing-Vektorelements (105d), das ein zwischen dem Quellknoten (101s) und dem Zielknoten (101d) vereinbartes erstes Bitmuster einschließt, mit einem anfänglichen Routing-Vektor (107), der eine Bitfolge umfasst,
Verschlüsseln der Verkettung des ersten Routing-Vektorelements (105d) und des anfänglichen Routing-Vektors (107) unter Verwendung eines ausgewählten ersten Verschlüsselungsschlüssels (103d) aus einer Vielzahl von ersten Kandidatenverschlüsselungsschlüsseln, die basierend auf einem Schlüsselableitungsmechanismus zwischen dem Quellknoten und dem Zielknoten vereinbart wurden,
Ersetzen eines Teils des verschlüsselten anfänglichen Routing-Vektors (107) an einer ersten Position des verschlüsselten anfänglichen Routing-Vektors (107) durch das verschlüsselte erste Routing-Vektorelement (105d) zum Erhalten eines ersten modifizierten Routing-Vektors (107'),
Verketten eines zweiten Routing-Vektorelements (105c), das ein zwischen dem Quellknoten (101a) und dem ersten Zwischenknoten (101c) vereinbartes zweites Bitmuster und Routing-Informationen des Zielknotens (101d) einschließt, mit dem ersten modifizierten Routing-Vektor (107'),
Verschlüsseln der Verkettung des zweiten Routing-Vektorelements (105c) und des ersten modifizierten Routing-Vektors (107') unter Verwendung eines ausgewählten zweiten Verschlüsselungsschlüssels (103c) aus einer Vielzahl von zweiten Kandidatenverschlüsselungsschlüsseln, die zwischen dem Quellknoten und dem ersten Zwischenknoten vereinbart wurden, und
Ersetzen eines Teils des verschlüsselten ersten modifizierten Routing-Vektors (107') an einer zweiten Position des verschlüsselten ersten modifizierten Routing-Vektors (107') durch das verschlüsselte zweite Routing-Vektorelement (105c) zum Erhalten eines zweiten modifizierten Routing-Vektors (107"); und
eine Kommunikationsschnittstelle (113s), die konfiguriert ist, um das Datenpaket, das den zweiten modifizierten Routing-Vektor (107") einschließt, in Richtung des ersten Zwischenknotens (101c) zu übertragen.

2. Quellknoten (101s) nach Anspruch 1, wobei die erste Position des verschlüsselten anfänglichen Routing-Vektors (107) und die zweite Position des verschlüsselten ersten modifizierten Routing-Vektors (107') zufällige Positionen, die durch die Verarbeitungsschaltung (111s) basierend auf einer pseudozufälligen Permutation ausgewählt werden, sind.

3. Quellknoten (101s) nach Anspruch 1 oder 2, wobei der anfängliche Routing-Vektor (107) eine zufällige Bitfolge fester Länge ist.

4. Quellknoten (101s) nach einem der vorstehenden Ansprüche, wobei das zweite Routing-Vektorelement (105c) ferner Informationen über die erste Position des verschlüsselten ersten Routing-Vektorelements (105d) innerhalb des ersten modifizierten Routing-Vektors (107') einschließt.

5. Quellknoten (101s) nach einem der vorstehenden Ansprüche, wobei das Datenpaket ferner Informationen über die zweite Position des verschlüsselten zweiten Routing-Vektorelements (105c) innerhalb des zweiten modifizierten Routing-Vektors (107") umfasst.

6. Quellknoten (101s) nach einem der vorstehenden Ansprüche, wobei die Verarbeitungsschaltung (111s) ferner konfiguriert ist zum:
Verketten eines dritten Routing-Vektorelements (105b), das ein zwischen dem Quellknoten (101s) und einem zweiten Zwischenknoten (101b) vereinbartes drittes Bitmuster und Routing-Informationen des ersten Zwischenknotens (101c) einschließt, mit dem zweiten modifizierten Routing-Vektor (107");
Verschlüsseln der Verkettung des dritten Routing-Vektorelements (105b) und des zweiten modifizierten Routing-Vektors (107") unter Verwendung eines ausgewählten dritten Verschlüsselungsschlüssels (103b) aus einer Vielzahl von dritten Kandidatenverschlüsselungsschlüsseln; und
Ersetzen eines Teils des verschlüsselten zweiten modifizierten Routing-Vektors (107") an einer dritten zufälligen Position des verschlüsselten zweiten modifizierten Routing-Vektors (107") durch das verschlüsselte dritte Routing-Vektorelement (105b) zum Erhalten eines dritten modifizierten Routing-Vektors; und
wobei die Kommunikationsschnittstelle (113s) konfiguriert ist, um das Datenpaket, das den dritten modifizierten Routing-Vektor einschließt, in Richtung des zweiten Zwischenknotens (101b) des einen oder der mehreren Zwischenknoten (101a-c) zu übertragen.

7. Quellknoten (101s) nach einem der vorstehenden Ansprüche, wobei die Verarbeitungsschaltung (111s) konfiguriert ist, um das erste Routing-Vektorelement (105d) mit dem anfänglichen Routing-Vektor (107) durch Voranstellen des ersten Routing-Vektorelements (105d) vor den anfänglichen Routing-Vektor (107) zu verketten, und/oder wobei die Verarbeitungsschaltung (111s) konfiguriert ist, um das zweite Routing-Vektorelement (105c) mit dem ersten modifizierten Routing-Vektor (107') durch Voranstellen des zweiten Routing-Vektorelements (105c) vor den ersten modifizierten Routing-Vektor (107') zu verketten.

8. Quellknoten (101s) nach einem der vorstehenden Ansprüche, wobei die Verarbeitungsschaltung (111s) ferner konfiguriert ist, um eine Nutzlast des Datenpakets unter Verwendung des ausgewählten ersten Verschlüsselungsschlüssels (103d) zu verschlüsseln und um die Nutzlast des Datenpakets unter Verwendung des ausgewählten zweiten Verschlüsselungsschlüssels (103c) weiter zu verschlüsseln.

9. Quellknoten (101s) nach einem der vorstehenden Ansprüche, wobei die Verarbeitungsschaltung (111s) konfiguriert ist, um zum Verschlüsseln und Entschlüsseln ein Verschlüsselungsschema mit symmetrischem Schlüssel zu verwenden.

10. Quellknoten (101s) nach Anspruch 9, wobei das Verschlüsselungsschema mit symmetrischem Schlüssel eine Blockchiffre umfasst.

11. Verfahren (600) zum Übertragen eines Datenpakets von einem Quellknoten (101s) über einen oder mehrere Zwischenknoten (101a-c), die einen ersten Zwischenknoten (101c) einschließen, an einen Zielknoten (101d) in einem Kommunikationsnetzwerk (100), wobei das Verfahren (600) umfasst:
Verketten (601), durch den Quellknoten (101s), eines ersten Routing-Vektorelements (105d), das ein zwischen dem Quellknoten (101s) und dem Zielknoten (101d) vereinbartes erstes Bitmuster einschließt, mit einem anfänglichen Routing-Vektor (107), der eine Bitfolge umfasst,
Verschlüsseln (603), durch den Quellknoten (101s), der Verkettung des ersten Routing-Vektorelements (105d) und des anfänglichen Routing-Vektors (107) unter Verwendung eines ausgewählten ersten Verschlüsselungsschlüssels (103d) aus einer Vielzahl von ersten Kandidatenverschlüsselungsschlüsseln, die basierend auf einem Schlüsselableitungsmechanismus zwischen dem Quellknoten und dem Zielknoten vereinbart wurden,
Ersetzen (605), durch den Quellknoten (101s), eines Teils des verschlüsselten anfänglichen Routing-Vektors (107) an einer ersten Position des verschlüsselten anfänglichen Routing-Vektors (107) durch das verschlüsselte erste Routing-Vektorelement (105d) zum Erhalten eines ersten modifizierten Routing-Vektors (107');
Verketten (607), durch den Quellknoten (101s), eines zweiten Routing-Vektorelements (105c), das ein zwischen dem Quellknoten (101s) und dem ersten Zwischenknoten (101c) vereinbartes zweites Bitmuster und Routing-Informationen des Zielknotens (101d) einschließt, mit dem ersten modifizierten Routing-Vektor (107');
Verschlüsseln (609), durch den Quellknoten (101s), der Verkettung des zweiten Routing-Vektorelements (105c) und des ersten modifizierten Routing-Vektors (107') unter Verwendung eines ausgewählten zweiten Verschlüsselungsschlüssels (103c) aus einer Vielzahl von zweiten Kandidatenverschlüsselungsschlüsseln, die zwischen dem Quellknoten und dem ersten Zwischenknoten vereinbart wurden;
Ersetzen (611), durch den Quellknoten (101s), eines Teils des verschlüsselten ersten modifizierten Routing-Vektors (107') an einer zweiten Position des verschlüsselten ersten modifizierten Routing-Vektors (107') durch das verschlüsselte zweite Routing-Vektorelement (105c) zum Erhalten eines zweiten modifizierten Routing-Vektors (107"); und
Übertragen (613), durch den Quellknoten (101s), des Datenpakets, das den zweiten modifizierten Routing-Vektor (107") einschließt, in Richtung des ersten Zwischenknotens (101c).

12. Kommunikationsnetzwerk (100) zum Routing eines Datenpakets von einem Quellknoten (101s) zu einem Zielknoten (101d), wobei das Kommunikationsnetzwerk einen Quellknoten nach einem der Ansprüche 1 bis 10 und einen Zwischenknoten (101a-c) umfasst, wobei der Zwischenknoten (101a-c) umfasst:
eine Kommunikationsschnittstelle (113a), die konfiguriert ist, um das Datenpaket, das durch den Quellknoten, 40, gesendet wird, von einem vorgelagerten Knoten des Kommunikationsnetzwerks (100) zu empfangen; und
eine Verarbeitungsschaltung (111a), die konfiguriert ist zum:
Extrahieren, aus einem verschlüsselten Routing-Vektor (107") in dem empfangenen Datenpaket, eines verschlüsselten Routing-Vektorelements (105b), das ein verschlüsseltes Bitmuster und verschlüsselte Routing-Informationen eines nachgelagerten Knotens einschließt;
Auswählen, basierend auf dem verschlüsselten Bitmuster, eines Verschlüsselungsschlüssels (103a) aus einer Vielzahl von Kandidatenverschlüsselungsschlüsseln; und
Entschlüsseln der verschlüsselten Routing-Informationen unter Verwendung des ausgewählten Verschlüsselungsschlüssels (103a) zum Erhalten von Routing-Informationen des nachgelagerten Knotens;
wobei die Kommunikationsschnittstelle (113a) ferner konfiguriert ist, um das Datenpaket basierend auf den erhaltenen Routing-Informationen des nachgelagerten Knotens auf dem Pfad in Richtung des Zielknotens an den nachgelagerten Knoten zu senden.

13. Kommunikationsnetzwerk nach Anspruch 12, wobei die Verarbeitungsschaltung (111a) des Zwischenknotens (101a-c) konfiguriert ist, um zum Verschlüsseln und Entschlüsseln ein Verschlüsselungsschema mit symmetrischem Schlüssel zu verwenden.

14. Kommunikationsnetzwerk nach Anspruch 13, wobei das Verschlüsselungsschema mit symmetrischem Schlüssel eine Blockchiffre umfasst.

15. Computerprogrammprodukt, das ein computerlesbares Speicherungsmedium zum Speichern von Programmcode umfasst, der einen Computer oder einen Prozessor dazu veranlasst, das Verfahren (600) nach Anspruch 11 durchzuführen, wenn der Programmcode durch den Computer oder den Prozessor ausgeführt wird.

## Revendications

1. Nœud source (101s) pour la transmission d'un paquet de données à un nœud de destination (101d) par l'intermédiaire d'un ou de plusieurs nœuds intermédiaires (101a-c), comportant un premier nœud intermédiaire (101c), dans un réseau de communication (100), dans lequel le nœud source (101s) comprend :
un ensemble de circuits de traitement (111s) configuré pour :
concaténer un premier élément de vecteur de routage (105d) comportant une première configuration binaire convenue entre le nœud source (101s) et le nœud de destination (101d) avec un vecteur de routage initial (107) comprenant une chaîne de bits,
chiffrer la concaténation du premier élément de vecteur de routage (105d) et du vecteur de routage initial (107) à l'aide d'une première clé de chiffrement sélectionnée (103d) d'une pluralité de premières clés de chiffrement candidates convenues entre le nœud source et le nœud de destination sur la base d'un mécanisme de dérivation de clé,
remplacer une partie du vecteur de routage initial (107) chiffré au niveau d'une première position du vecteur de routage initial (107) chiffré par le premier élément de vecteur de routage (105d) chiffré pour l'obtention d'un premier vecteur de routage modifié (107'),
concaténer un deuxième élément de vecteur de routage (105c), comportant une deuxième configuration binaire convenue entre le nœud source (101a) et le premier nœud intermédiaire (101c) et des informations de routage du nœud de destination (101d), avec le premier vecteur de routage modifié (107'),
chiffrer la concaténation du deuxième élément de vecteur de routage (105c) et du premier vecteur de routage modifié (107') à l'aide d'une deuxième clé de chiffrement sélectionnée (103c) d'une pluralité de deuxièmes clés de chiffrement candidates convenues entre le nœud source et le premier nœud intermédiaire, et
remplacer une partie du premier vecteur de routage modifié (107') chiffré au niveau d'une deuxième position du premier vecteur de routage modifié (107') chiffré par le deuxième élément de vecteur de routage (105c) chiffré pour l'obtention d'un deuxième vecteur de routage modifié (107") ; et
une interface de communication (113s) configurée pour transmettre le paquet de données comportant le deuxième vecteur de routage modifié (107") vers le premier nœud intermédiaire (101c).

2. Nœud source (101s) selon la revendication 1, dans lequel la première position du vecteur de routage initial (107) chiffré et la deuxième position du premier vecteur de routage modifié (107') chiffré sont des positions aléatoires sélectionnées par l'ensemble de circuits de traitement (111s) sur la base d'une permutation pseudo-aléatoire.

3. Nœud source (101s) selon la revendication 1 ou 2, dans lequel le vecteur de routage initial (107) est une chaîne de bits aléatoires de longueur fixe.

4. Nœud source (101s) selon l'une quelconque des revendications précédentes, dans lequel le deuxième élément de vecteur de routage (105c) comporte en outre des informations concernant la première position du premier élément de vecteur de routage (105d) chiffré au sein du premier vecteur de routage modifié (107').

5. Nœud source (101s) selon l'une quelconque des revendications précédentes, dans lequel le paquet de données comprend en outre des informations concernant la deuxième position du deuxième élément de vecteur de routage (105c) chiffré au sein du deuxième vecteur de routage modifié (107").

6. Nœud source (101s) selon l'une quelconque des revendications précédentes, dans lequel l'ensemble de circuits de traitement (111s) est en outre configuré pour :
concaténer un troisième élément de vecteur de routage (105b), comportant une troisième configuration binaire convenue entre le nœud source (101s) et un second nœud intermédiaire (101b) et des informations de routage du premier nœud intermédiaire (101c), avec le deuxième vecteur de routage modifié (107") ;
chiffrer la concaténation du troisième élément de vecteur de routage (105b) et du deuxième vecteur de routage modifié (107") à l'aide d'une troisième clé de chiffrement sélectionnée (103b) d'une pluralité de troisièmes clés de chiffrement candidates ; et
remplacer une partie du deuxième vecteur de routage modifié (107") chiffré au niveau d'une troisième position aléatoire du deuxième vecteur de routage modifié (107") chiffré par le troisième élément de vecteur de routage (105b) chiffré pour l'obtention d'un troisième vecteur de routage modifié ; et
dans lequel l'interface de communication (113s) est configurée pour transmettre le paquet de données comportant le troisième vecteur de routage modifié vers le second nœud intermédiaire (101b) du ou des nœuds intermédiaires (101a-c).

7. Nœud source (101s) selon l'une quelconque des revendications précédentes, dans lequel l'ensemble de circuits de traitement (111s) est configuré pour concaténer le premier élément de vecteur de routage (105d) avec le vecteur de routage initial (107) en ajoutant le premier élément de vecteur de routage (105d) au début du vecteur de routage initial (107) et/ou dans lequel l'ensemble de circuits de traitement (111s) est configuré pour concaténer le deuxième élément de vecteur de routage (105c) avec le premier vecteur de routage modifié (107') en ajoutant le deuxième élément de vecteur de routage (105c) au début du premier vecteur de routage modifié (107').

8. Nœud source (101s) selon l'une quelconque des revendications précédentes, dans lequel l'ensemble de circuits de traitement (111s) est en outre configuré pour chiffrer des données utiles de paquet de données à l'aide de la première clé de chiffrement sélectionnée (103d) et pour chiffrer en outre les données utiles de paquet de données à l'aide de la deuxième clé de chiffrement sélectionnée (103c).

9. Nœud source (101s) selon l'une quelconque des revendications précédentes, dans lequel, pour le chiffrement et le déchiffrement, l'ensemble de circuits de traitement (111s) est configuré pour utiliser un schéma de chiffrement à clé secrète.

10. Nœud source (101s) selon la revendication 9, dans lequel le schéma de chiffrement à clé secrète comprend un chiffrement par blocs.

11. Procédé (600) pour la transmission d'un paquet de données d'un nœud source (101s) à un nœud de destination (101d) par l'intermédiaire d'un ou de plusieurs nœuds intermédiaires (101a-c), comportant un premier nœud intermédiaire (101c), dans un réseau de communication (100), dans lequel le procédé (600) comprend :
la concaténation (601), par le nœud source (101s), d'un premier élément de vecteur de routage (105d) comportant une première configuration binaire convenue entre le nœud source (101s) et le nœud de destination (101d) avec un vecteur de routage initial (107) comprenant une chaîne de bits,
le chiffrement (603), par le nœud source (101s), de la concaténation du premier élément de vecteur de routage (105d) et du vecteur de routage initial (107) à l'aide d'une première clé de chiffrement sélectionnée (103d) d'une pluralité de premières clés de chiffrement candidates convenues entre le nœud source et le nœud de destination sur la base d'un mécanisme de dérivation de clé,
le remplacement (605), par le nœud source (101s), d'une partie du vecteur de routage initial (107) chiffré au niveau d'une première position du vecteur de routage initial (107) chiffré par le premier élément de vecteur de routage (105d) chiffré pour l'obtention d'un premier vecteur de routage modifié (107') ;
la concaténation (607), par le nœud source (101s), d'un deuxième élément de vecteur de routage (105c), comportant une deuxième configuration binaire convenue entre le nœud source (101s) et le premier nœud intermédiaire (101c) et des informations de routage du nœud de destination (101d), avec le premier vecteur de routage modifié (107') ;
le chiffrement (609), par le nœud source (101s), de la concaténation du deuxième élément de vecteur de routage (105c) et du premier vecteur de routage modifié (107') à l'aide d'une deuxième clé de chiffrement sélectionnée (103c) d'une pluralité de deuxièmes clés de chiffrement candidates convenues entre le nœud source et le premier nœud intermédiaire ;
le remplacement (611), par le nœud source (101s), d'une partie du premier vecteur de routage modifié (107') chiffré au niveau d'une deuxième position du premier vecteur de routage modifié (107') chiffré par le deuxième élément de vecteur de routage (105c) chiffré pour l'obtention d'un deuxième vecteur de routage modifié (107") ; et
la transmission (613), par le nœud source (101s), du paquet de données comportant le deuxième vecteur de routage modifié (107") vers le premier nœud intermédiaire (101c).

12. Réseau de communication (100) pour le routage d'un paquet de données d'un nœud source (101s) à un nœud de destination (101d), le réseau de communication comprenant un nœud source selon l'une quelconque des revendications 1 à 10 et un nœud intermédiaire (101a-c), dans lequel le nœud intermédiaire (101a-c) comprend :
une interface de communication (113a) configurée pour recevoir le paquet de données, transmis par le nœud source, à partir d'un nœud en amont du réseau de communication (100) ; et
un ensemble de circuits de traitement (111a) configuré pour :
extraire à partir d'un vecteur de routage (107") chiffré, dans ledit paquet de données reçu, un élément de vecteur de routage (105b) chiffré, comportant une configuration binaire chiffrée et des informations de routage chiffrées d'un nœud en aval ;
sélectionner, sur la base de la configuration binaire chiffrée, une clé de chiffrement (103a) d'une pluralité de clés de chiffrement candidates ; et
déchiffrer les informations de routage chiffrées à l'aide de la clé de chiffrement sélectionnée (103a) pour l'obtention d'informations de routage du nœud en aval ;
dans lequel l'interface de communication (113a) est en outre configurée pour envoyer le paquet de données au nœud en aval, sur le chemin vers le nœud de destination, sur la base des informations de routage obtenues du nœud en aval.

13. Réseau de communication selon la revendication 12, dans lequel, pour le chiffrement et le déchiffrement, l'ensemble de circuits de traitement (111a) du nœud intermédiaire (101a-c) est configuré pour utiliser un schéma de chiffrement à clé secrète.

14. Réseau de communication selon la revendication 13, dans lequel le schéma de chiffrement à clé secrète comprend un chiffrement par blocs.

15. Produit-programme d'ordinateur comprenant un support de stockage lisible par ordinateur pour le stockage d'un code de programme qui amène un ordinateur ou un processeur à réaliser le procédé (600) selon la revendication 11 lorsque le code de programme est exécuté par l'ordinateur ou le processeur.
